# EUROPÄISCHE PATENTANMELDUNG

(11) **EP 4 700 267 A1**
(43) Veröffentlichungstag der Anmeldung: **25.02.2026**
(21) Anmeldenummer: 25193832.0
(22) Anmeldetag: 04.08.2025
(51) Int. Cl.: F16L 55/179, F16L 55/18

(54) **VORRICHTUNG ZUR SANIERUNG DES MÜNDUNGSBEREICHES EINER IN EIN BEGEHBARES KANALROHR EINMÜNDENDEN ZULAUFLEITUNG**

(30) Priorität: 21.08.2024 DE 202024104744 U
(71) Anmelder: Schuster, Daniel, 57632 Burglahr (DE); Schuster, Rainer, 56593 Horhausen (DE)
(72) Erfinder: Schuster, Daniel, 57632 Burglahr (DE); Schuster, Rainer, 56593 Horhausen (DE)
(74) Vertreter: KBN IP Patentanwälte Partnerschaft mbB

(57) **Zusammenfassung**

Die Erfindung betrifft eine Vorrichtung zur Sanierung des Mündungsbereiches (20) einer in ein begehbares Kanalrohr (1) einmündenden Zulaufleitung (2), umfassend ein ringförmiges flexibles Anpressschild (5) zum Anlegen an eine den Mündungsbereich (20) der Zulaufleitung (2) umgebende Innenoberfläche (10) des Kanalrohrs (1) und eine zur Einführung in die Zulaufleitung (2) bestimmte und vorübergehend aufweitbare Absperrblase (4), die an einem nicht in die Zulaufleitung (2) weisenden Ende (40) eine Spanneinrichtung aufweist, mittels derer eine Presskraft auf das Anpressschild (5) in Richtung der Innenoberfläche (10) des Kanalrohrs (1) erzeugbar ist, wobei das Anpressschild (5) mindestens eine durch das Anpressschild verlaufende Einspritzöffnung (52) für ein Verfüllmaterial aufweist.

## Beschreibung

Die Erfindung betrifft eine Vorrichtung zur Sanierung des Mündungsbereiches einer in ein begehbares Kanalrohr einmündenden Zulaufleitung.

Im Zuge der Sanierung eines Mündungsbereiches einer in ein begehbares Kanalrohr einmündenden Zulaufleitung kommen Systeme und Vorrichtungen zum Einsatz, bei denen ein Hutprofil als Auskleidung des Mündungsbereiches mit einer aufweitbaren Absperrblase innenseitig an die Zulaufleitung angepresst und mittels eines Anpressschildes und einer zugeordneten Spanneinrichtung auch an der Innenoberfläche der den Mündungsbereich umgebenden Wandung des Kanals so lange angepresst werden, bis eine stoffschlüssige Verbindung hergestellt und der Mündungsbereich mittels des Hutprofils ausgekleidet und saniert ist. Eine derartige Vorrichtung ist beispielsweise aus der DE 20 2021 105 172 U1 bekannt geworden.

Die bekannte Vorrichtung liefert hervorragende Arbeitsergebnisse, ist jedoch bei zu sanierenden Mündungsbereichen, die im Übergang zur Innenoberfläche des Kanalrohrs teilweise ausgebrochen sind, nur eingeschränkt nutzbar, da die ausgebrochenen Bereiche der den Mündungsbereich umgebenden Innenoberfläche des Kanalrohrs als Abstützung für ein eingesetztes Hutprofil nicht zur Verfügung stehen und insoweit das Erreichen einer stoffschlüssigen Verbindung zwischen Hutprofil und dem Mündungsbereich der Zulaufleitung bzw. der den Mündungsbereich umgebenden Innenoberfläche des Kanalrohrs schwierig bis unmöglich wird.

Die Erfindung hat sich daher die Aufgabe gestellt, eine Vorrichtung der eingangs genannten Art vorzuschlagen, die auf möglichst einfache Weise die Sanierung auch derartiger mit Ausbrüchen versehener Mündungsbereiche einer in ein begehbares Kanalrohr einmündenden Zulaufleitung ermöglicht.

Zur Lösung der gestellten Aufgabe wird erfindungsgemäß die Ausgestaltung einer Vorrichtung gemäß den Merkmalen des Patentanspruches 1 vorgeschlagen.

Vorteilhafte Ausgestaltungen und Weiterbildungen der Erfindung sind Gegenstand der abhängigen Ansprüche.

Die Erfindung schlägt eine Vorrichtung zur Sanierung des Mündungsbereiches einer in ein begehbares Kanalrohr einmündenden Zulaufleitung vor, die ein ringförmiges flexibles Anpressschild aufweist, welches zum Anlegen an eine den Mündungsbereich der Zulaufleitung umgebende Innenoberfläche des Kanalrohrs bestimmt ist, ferner auch eine zur Einführung in die Zulaufleitung bestimmte und vorübergehend aufweitbare Absperrblase, die an einem nicht in die Zulaufleitung weisenden Ende eine Spanneinrichtung aufweist, mittels derer im in die Zulaufleitung eingesetzten Zustand der Vorrichtung eine Presskraft auf das Anpressschild in Richtung der Innenoberfläche des Kanalrohrs erzeugbar ist. Weiterhin ist vorgesehen, dass das Anpressschild mindestens eine durch das Anpressschild verlaufende Einspritzöffnung für ein Verfüllmaterial aufweist.

Die erfindungsgemäße Vorrichtung ähnelt von daher in einigen ihrer Komponenten dem aus der DE 20 2021 105 172 U1 bekannten System, kommt jedoch ohne Hutprofil aus. Die Vorrichtung wird mittels der Absperrblase in der Zulaufleitung nach Aufweitung der Absperrblase vorübergehend fixiert, um mittels der Spanneinrichtung das Anpressschild an die Innenoberfläche des Kanalrohrs im den Mündungsbereich der Zulaufleitung umgebenden Bereich anzupressen. In dieser Position kann sodann ein geeignetes Verfüllmaterial in den teilweise ausgebrochenen Mündungsbereich der in das Kanalrohr einmündenden Zulaufleitung durch das Anpressschild hindurch eingepresst werden. Das solchermaßen eingepresste Verfüllmaterial wird einerseits von der aufgespannten Absperrblase an einem Zutritt in die Zulaufleitung und andererseits vom Anpressschild an einem Übertritt in das Kanalrohr abgehalten, sodass lediglich der ausgebrochene Mündungsbereich zur Aufnahme des Verfüllmaterials zur Verfügung steht. Nach Aushärten des Verfüllmaterials werden das Anpressschild sowie die Absperrblase gelöst und entfernt, wodurch der defekte und ausgebrochene Mündungsbereich der Zulaufleitung mit dem verbleibenden ausgehärteten Verfüllmaterial saniert ist.

Als Verfüllmaterial im Sinne der Erfindung kommen beispielsweise ein geeignetes Injektionsharz, ein Injektionskleber oder Injektionsschaum, ein Verpressharz oder Verpresskleber, ein Verpressmörtel, Verpressbeton oder ein Injektionsmörtel oder Injektionsbeton in Betracht, der vom Fachmann entsprechend der jeweiligen Umgebungsbedingungen ausgewählt werden kann.

Nach einem Vorschlag der Erfindung ist die Absperrblase an ihrem nicht in die Zulaufleitung weisenden Ende mit einem im Wesentlichen U-förmig ausgebildeten Anpressbügel mit zwei Schenkelenden und einem zwischen diesen verlaufenden Verbindungsschenkel ausgeführt, der die Absperrblase im Bereich des nicht in die Zulaufleitung weisenden Endes übergreift und mit seinen Schenkelenden an diametral gegenüberliegenden Bereichen des Anpressschildes lösbar aufsetzbar ist. Die Spannvorrichtung greift sodann am Verbindungsschenkel an, mittels derer die Presskraft von den Schenkelenden auf das Anpressschild erzeugbar ist. Bei nahezu tangential in das Kanalrohr einmündenden Zulaufleitungen kann zudem mit einer Stützstange, die sich an der Innenwandung des Kanalrohrs abstützt, eine hinreichende Presskraft auf den Verbindungsschenkel aufgebracht werden, die von den Schenkelenden auf das Anpressschild übertragen wird.

Nach einem weiteren Vorschlag der Erfindung umfasst die Spanneinrichtung eine auf die Absperrblase lösbar aufsetzbare und diese axial fortsetzende Gewindestange und eine auf der Gewindestange in Eingriff stehende Spannmutter, mittels derer die Presskraft beispielsweise über den Anpressbügel auf das Anpressschild erzeugbar ist.

Die Gewindestange kann zudem eine zentrale Durchgangsbohrung aufweisen und ist mit einem Ende abdichtend auf ein Ventil der Absperrblase aufsetzbar und weist am anderen, freien Ende ein Anschlussventil auf, über welches die Absperrblase aufgeweitet bzw. nach Abschluss der Sanierung auch entspannt werden kann, um die Absperrblase wieder aus der Zulaufleitung zu entnehmen.

Das Anpressschild kann nach einem Vorschlag der Erfindung aus einem elastisch verformbaren Material, insbesondere einem Hart-PVC, gebildet sein.

Ferner kann das Anpressschild auf der der Innenoberfläche zugewandten Oberfläche mit einer elastisch komprimierbaren Schaumkunststoffschicht versehen sein, zudem kann auch eine Silikon-Beschichtung alternativ oder zusätzlich aufgetragen werden, um ein Anhaften des Verfüllmaterials an der Oberfläche des Anpressschildes zu verhindern.

Die mindestens eine Einspritzöffnung der erfindungsgemäßen Vorrichtung kann mit einem in Richtung der Innenoberfläche öffnenden und in Gegenrichtung verschließendem Füllventil ausgebildet sein, um eine effektive Auffüllung des ausgebrochenen Mündungsbereiches der Zulaufleitung zu gewährleisten.

Weitere Ausgestaltungen und Einzelheiten der Erfindung werden nachfolgend anhand der ein Ausführungsbeispiel darstellenden Zeichnung erläutert. Es zeigen:
Figur 1 in schematischer perspektivischer Darstellung ein Kanalrohr mit einmündender Zulaufleitung und eingesetzter Vorrichtung;
Figur 2 einen Schnitt durch das Kanalrohr gemäß Figur 1 im Bereich der einmündenden Zulaufleitung;
Figur 3 eine weitere Ausführungsform der Erfindung im Schnitt;
Figur 4 das Anpressschild der erfindungsgemäßen Vorrichtung in perspektivischer Darstellung;
Figur 5 einen vertikalen Schnitt durch das Anpressschild gemäß Figur 4.

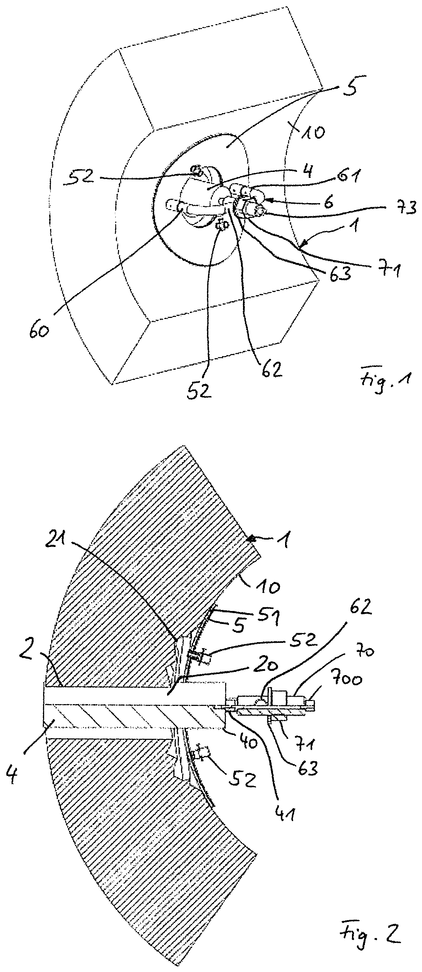

Aus den Figuren 1 und 2 ist in schematischer Darstellung ein Kanalrohr 1, beispielsweise ein übliches Betonrohr ausschnittsweise dargestellt, welches solche Dimensionen aufweist, dass es durch eine Person begehbar ist. Im dargestellten Längenabschnitt des Kanalrohrs 1 mündet seitlich etwa rechtwinklig eine Zulaufleitung 2 in das Kanalrohr 1 ein, bei der es sich beispielsweise um eine Hausanschlussleitung handeln kann. Die Zulaufleitung 2 mündet dabei mit ihrem Mündungsbereich 20 in das Kanalrohr 1 ein, wobei der Mündungsbereich 20 von einem Teilbereich der Innenoberfläche 10 des Kanalrohrs 1 umgeben ist.

Bei derartigen Mündungsbereichen 20 von Zulaufleitungen 2 kommt es häufiger vor, dass diese verschleißbedingt um den Mündungsbereich 20 herum ausgebrochene Zonen 21 aufweisen, in denen die den Mündungsbereich 20 umgebende Innenoberfläche 10 des Kanalrohrs 1 unregelmäßig ausgebrochen ist. Derartige ausgebrochene Zonen 21 müssen aufwendig saniert werden.

Um dieses zu ermöglichen, wird eine Vorrichtung der in den Figuren dargestellten Ausgestaltung in die Zulaufleitung 2 eingesetzt.

Die Vorrichtung umfasst dazu eine an sich bekannte und im Wesentlichen zylindrisch ausgebildete Absperrblase 4, die mit einem Ende ausgehend vom Kanalrohr 1 über den Mündungsbereich 20 in die Zulaufleitung 2 eingeführt werden kann und durch Beaufschlagung mit einem unter geeignetem Druck stehenden Fluid, beispielsweise Druckluft, über ein Ventil 41 in seinem Durchmesser vorübergehend soweit aufgeweitet werden kann, dass es die Zulaufleitung 2 vollständig ausfüllt und eine ortsfeste Fixierung der Absperrblase 4 in der Zulaufleitung 2 bewirkt.

An ihrem nicht in die Zulaufleitung 2 weisenden Ende 40 ist die Absperrblase 4 nicht nur mit einem Ventil 41 zum Einfüllen des der Aufweitung dienenden Fluids ausgebildet, sondern anschließend an das Ventil 41 ist in Fortsetzung des Ventils 41 eine Gewindestange 70 als Teil einer Spanneinrichtung vorgesehen, die über eine zentrale Durchgangsbohrung verfügt, um am freien Ende 700 eine Befüllvorrichtung für das in die Absperrblase 4 einzuleitende Fluid einzubringen.

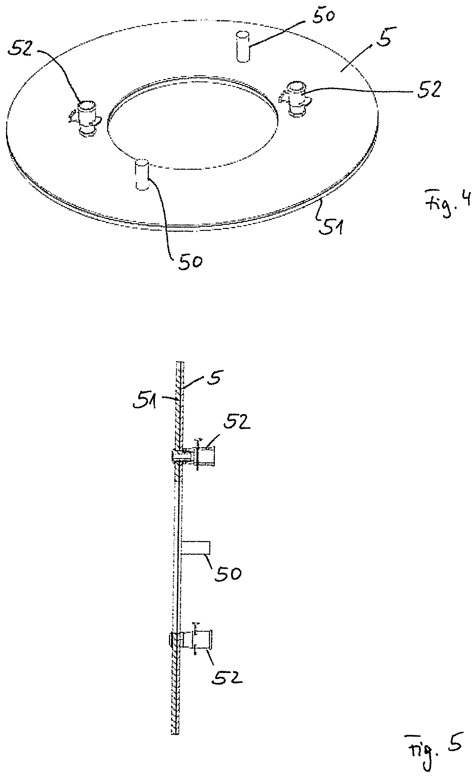

Quer zur Gewindestange 70 erstreckt sich zudem ein Verbindungsschenkel 62 eines im wesentlichen U-förmig ausgebildeten Anpressbügels 6, der mit seinen beiden freien Schenkelenden 60, 61 auf ein in näheren Einzelheiten aus den Figuren 4 und 5 ersichtliches Anpressschild 5 aufgesetzt ist.

Zu diesem Zweck weist das Anpressschild 52 entsprechend voneinander beanstandete Fixierstifte 50 zum Aufsetzen jeweils eines Schenkelendes 60, 61 des Anpressbügels 6 auf. Durch die zentrale Ringöffnung des Anpressschildes 5 tritt das nicht in die Zulaufleitung 2 weisende Ende 40 der Absperrblase 4 hindurch.

Das im Wesentlichen ringförmig ausgebildete Anpressschild 5 ist aus einem elastisch verformbaren Material, insbesondere einem Hart-PVC, gebildet und an seiner dem U-förmigen Haltebügel 6 abweisenden Seite mit einer Schaumkunststoffschicht 51 sowie einer Silikonbeschichtung versehen.

Sobald die Absperrblase 4 in der bereits beschriebenen Weise in der Zulaufleitung 2 fixiert ist, kann über eine auf der Gewindestange 70 ablaufende Spannmutter 71 unter Zwischenlage einer Scheibe 63 eine Anpresskraft auf den quer verlaufenden Verbindungsschenkel 62 des Anpressbügels 6 ausgeübt werden, der somit als Spanneinrichtung über seine Schenkelenden 60,61 eine in Richtung auf die Innenoberfläche 10 des Kanalrohres 1 gerichtete Spannkraft auf das Anpressschild 5 ausübt. Infolge dieser Spannkraft legt sich das Anpressschild 5 unter elastischer Verformung an die Innenoberfläche 10 des Kanalrohrs 1 an, wie in Figuren 1 und 2 dargestellt, wobei die ausgebrochenen Zonen 21 des Mündungsbereiches 20 der Zulaufleitung 2 zum inneren Lumen des Kanalrohrs 1 hin abgedeckt werden. Zugleich wird das Innenlumen des Zulaufrohrs 2 von der aufgeweiteten Absperrblase 4 abgedichtet, die gegebenenfalls durch eine Umwicklung mit einer Folienlage zusätzlich geschützt werden kann. Um eine höhere Anpresskraft auf das Anpressschild 5 zu erzeugen, kann zusätzlich eine Federringscheibe zwischen Anpressschild 5 und Anpressbügel 6 aufgelegt werden.

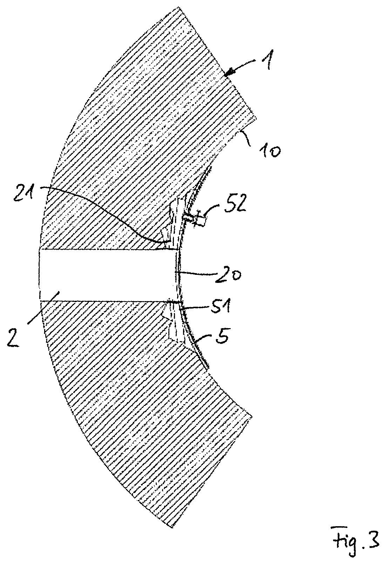

In dieser, an die Innenoberfläche 10 des Kanalrohrs 1 angepassten Konfiguration kann sodann ein geeignetes Verfüllmaterial, beispielsweise ein Injektionsmörtel oder -harz über mindestens eine das Anpressschild 5 in Richtung auf die Innenoberfläche 10 des Kanalrohrs durchsetzende Einspritzöffnung 52 gemäß Figur 3, vorzugsweise über zwei an diametral gegenüberliegenden Bereichen angeordnete Einspritzöffnungen 52 in die hinter dem Anpressschild 5 liegende ausgebrochene Zone 21 des Mündungsbereiches 20 injiziert werden, wobei entsprechende Ventile in der mindestens einen Einspritzöffnung 52 das Injizieren in die ausgebrochene Zone ermöglichen, einen Rückfluss des Verfüllmaterials aus der ausgebrochenen Zone 21 jedoch versperren.

Es versteht sich, dass das Anpressschild 5 auch mit mehr als zwei derartigen Einspritzöffnungen 52 versehen sein kann.

Nach Ablauf einer ausreichenden Haltedauer ist sodann das in die ausgebrochene Zone 21 injizierte Verfüllmaterial ausgehärtet und die Absperrblase 4 kann durch Ablassen des eingeführten Fluids entspannt werden, sodass sie mitsamt des an die Innenoberfläche 10 des Kanalrohrs 1 angepressten Anpressschildes 5 aus der Zulaufleitung 2 entnommen werden kann und die zuvor mit ausgebrochenen Zonen 21 im Mündungsbereich 20 versehene Zulaufleitung 2 vollständig saniert ist.

Mit der vorangehend erläuterten Vorrichtung ist es somit möglich, ausgebrochene Mündungsbereiche einer in ein begehbares Kanalrohr einmündenden Zulaufleitung auf einfachste Weise zu sanieren.

Anstelle einer wie dargestellt rechtwinkligen Einmündung der Zulaufleitung 2 in das Kanalrohr 1 können auch spitzwinkligere Einmündungen saniert werden, da das Anpressschild 5 sich flexibel an die Innenoberfläche 10 des Kanalrohrs 1 anlegen lässt. Sofern die über eine Spannmutter 71 erzeugbare Presskraft auf das Anpressschild 5 in dieser Konfiguration nicht mehr ausreichend sein sollte, kann anstelle der Gewindestange 70 eine längenveränderliche Stützstange angesetzt werden, die sich an der gegenüberliegenden Innenwandung des Kanalrohrs 1 abstützt und eine gewünschte Presskraft auf den Verbindungsschenkel 62 ausübt.

### Bezugszeichenliste:

- 1:: Kanalrohr
- 2:: Zulaufleitung
- 4:: Absperrblase
- 5:: Anpressschild
- 6:: Anpressbügel
- 10:: Innenoberfläche
- 20:: Mündungsbereich
- 21:: ausgebrochene Zone
- 40:: nicht in Zulaufleitung weisendes Ende
- 41:: Ventil
- 50:: Fixierstift
- 51:: Schaumkunststoffschicht
- 52:: Einspritzöffnung
- 60:: Schenkelende
- 61:: Schenkelende
- 62:: Verbindungsschenkel
- 63:: Scheibe
- 70:: Gewindestange
- 71:: Spannmutter
- 73:: Gewindestange
- 700:: Anschlussventil

## Patentansprüche

1. Vorrichtung zur Sanierung des Mündungsbereiches (20) einer in ein begehbares Kanalrohr (1) einmündenden Zulaufleitung (2), umfassend ein ringförmiges flexibles Anpressschild (5) zum Anlegen an eine den Mündungsbereich (20) der Zulaufleitung (2) umgebende Innenoberfläche (10) des Kanalrohrs (1) und eine zur Einführung in die Zulaufleitung (2) bestimmte und vorübergehend aufweitbare Absperrblase (4), die an einem nicht in die Zulaufleitung (2) weisenden Ende (40) eine Spanneinrichtung aufweist, mittels derer eine Presskraft auf das Anpressschild (5) in Richtung der Innenoberfläche (10) des Kanalrohrs (1) erzeugbar ist, wobei das Anpressschild (5) mindestens eine durch das Anpressschild verlaufende Einspritzöffnung (52) für ein Verfüllmaterial aufweist.

2. Vorrichtung nach Anspruch 1, **dadurch gekennzeichnet, dass** die Absperrblase (4), an ihrem nicht in die Zulaufleitung (2) weisenden Ende (40) einen im wesentlichen U-förmig ausgebildeten Anpressbügel (6) mit zwei Schenkelenden (60, 61) und einem Verbindungsschenkel (62) umfasst, der die Absperrblase (4) im Bereich des nicht in die Zulaufleitung (2) weisenden Endes (40) übergreift und mit seinen Schenkelenden (60, 61) an diametral gegenüberliegenden Bereichen des Anpressschildes (5) lösbar aufsetzbar ist und die Spanneinrichtung am Verbindungsschenkel (62) angreift, mittels derer die Presskraft von den Schenkelenden (60, 61) auf das Anpressschild (5) erzeugbar ist.

3. Vorrichtung nach Anspruch 1 oder 2, **dadurch gekennzeichnet, dass** die Spanneinrichtung eine auf die Absperrblase (4) lösbar aufsetzbare und diese axial fortsetzende Gewindestange (70) und eine auf der Gewindestange (70) in Eingriff befindliche Spannmutter (71) umfasst.

4. Vorrichtung nach Anspruch 3, **dadurch gekennzeichnet, dass** die Gewindestange (70) eine zentrale Durchgangsbohrung (701) aufweist und mit einem Ende abdichtend auf ein Ventil (41) der Absperrblase (4) aufsetzbar ist und am anderen Ende ein Anschlussventil (700) aufweist.

5. Vorrichtung nach einem der Ansprüche 1 bis 4, **dadurch gekennzeichnet, dass** das Anpressschild (5) aus einem elastisch verformbaren Material, insbesondere Hart-PVC, gebildet ist.

6. Vorrichtung nach einem der Ansprüche 1 bis 5, **dadurch gekennzeichnet, dass** das Anpressschild (5) auf der der Innenoberfläche (10) zugewandten Oberfläche mit einer elastisch komprimierbaren Schaumkunststoffschicht (51) versehen ist.

7. Vorrichtung nach einem der Ansprüche 1 bis 6, **dadurch gekennzeichnet, dass** die mindestens eine Einspritzöffnung (52) mit einem in Richtung der Innenoberfläche (10) öffnenden und in Gegenrichtung verschließendem Füllventil ausgebildet ist.
